(19) **Europäisches Patentamt / European Patent Office / Office européen des brevets**

(11) **EP 4 170 552 A1**

(12) # EUROPEAN PATENT APPLICATION
published in accordance with Art. 153(4) EPC

(43) Date of publication:
26.04.2023 Bulletin 2023/17

(21) Application number: 21830012.7

(22) Date of filing: 22.06.2021

(51) International Patent Classification (IPC):
G06N 3/08 (2023.01)          G06N 3/04 (2023.01)
G06K 9/62 (2022.01)

(52) Cooperative Patent Classification (CPC):
G06F 18/00; G06N 3/04; G06N 3/08

(86) International application number:
PCT/CN2021/101545

(87) International publication number:
WO 2021/259262 (30.12.2021 Gazette 2021/52)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 23.06.2020 CN 202010581487

(71) Applicant: ZTE Corporation
Shenzhen, Guangdong 518057 (CN)

(72) Inventors:
• QIU, Ruitao
  Shenzhen, Guangdong 518057 (CN)
• YANG, Xikun
  Shenzhen, Guangdong 518057 (CN)
• LUO, Qingkai
  Shenzhen, Guangdong 518057 (CN)
• HAN, Bingtao
  Shenzhen, Guangdong 518057 (CN)
• WANG, Yongcheng
  Shenzhen, Guangdong 518057 (CN)
• TU, Yaofeng
  Shenzhen, Guangdong 518057 (CN)

(74) Representative: Canzler & Bergmeier
Patentanwälte
Partnerschaft mbB
Despag-Straße 6
85055 Ingolstadt (DE)

(54) **METHOD FOR GENERATING NEURAL NETWORK, AND DEVICE AND COMPUTER-READABLE STORAGE MEDIUM**

(57) A method for generating a neural network, and a device and a computer-readable storage medium. The method for generating a neural network comprises: acquiring optimal micro-units, and constructing a first network by using the optimal micro-units (S100), such that the first network has a powerful enough performance and can meet actual application requirements; training the first network by using a preset training data set to obtain a second network (S200), and establishing a third network, wherein the number of micro-units of the third network is less than the number of micro-units of the second network; and respectively training the micro-units of the third network by using the second network (S300); and according to the trained micro-units of the third network, obtaining a neural network model by means of construction (S400).

Fig. 2

Description

**CROSS-REFERENCE TO RELATED APPLICATION**

This application is based on and claims the priority of Chinese patent application No. 202010581487.2 filed on June 23, 2020, the disclosure of which is incorporated herein by reference in its entirety.

**TECHNICAL FIELD**

The present invention relates to the technical field of computers, in particular to a method for generating a neural network, a device and a computer-readable storage medium.

**BACKGROUND**

Deep learning technology has made great progress in recent years with the support of stronger computing power, and has achieved great success in many fields such as computer vision, speech recognition, and natural language processing. Researchers have found that among the factors that make up a deep learning model, structural variation of an artificial neural network has a great influence on the final performance of the model. Typically, to design an appropriate neural network for a specific problem, an experienced algorithm engineer may need to spend a lot of time and energy repeatedly adjusting and verifying/validating the model, and the adjustment efficiency and effect are poor. Therefore, a neural architecture search technology, which can automatically determine a neural network structure for a target problem, has become a research focus in the field of deep learning in recent years.

However, a specific deployment problem exists in the actual application of the existing neural network search technology. A neural network solving a specific problem needs to be deployed on various terminals with drastically varying levels of computing power, such as mobile phones, tablet computers, notebook computers, and desktop computers of different models. Therefore, it is necessary to provide a suite of neural network models of all sizes for various inference terminals. The computing cost for generating such a suite of models is huge. At present, two schemes can be adopted to generate a suite of neural network models: (1) the first scheme is to construct micro-unit networks and train these micro-unit networks one by one; and (2) the second scheme is to define and train a supernetwork containing a large number of third networks. Obviously, both schemes require a lot of computing power. Therefore, an efficient neural network model construction method is proposed, which is of great significance to the deployment of neural network search in practical applications.

**SUMMARY**

The present invention aims at solving at least one of the relevant technical problems at least to some extent. In view of this, embodiments of the present invention provide a method for generating a neural network, a device, and a computer-readable storage medium.

In accordance with a first aspect of the present invention, an embodiment provides a method for generating a neural network, including: acquiring optimal micro-units, and constructing a first network according to the optimal micro-units; training the first network by utilizing a preset training data set to obtain a second network; constructing third networks, and training each micro-unit of the third networks by utilizing the second network, the number of the micro-units of each of the third networks being less than the number of the optimal micro-units of the first network; and obtaining neural network models according to the trained micro-units in the third networks.

In accordance with a second aspect of the present invention, an embodiment provides a device, including a memory, a processor, and a computer program stored in the memory and executable by the processor, where the computer program, when executed by the processor, causes the processor to perform the method for generating a neural network of the embodiment of the first aspect.

In accordance with a third aspect of the present invention, an embodiment provides a computer-readable storage medium which stores computer-executable instructions for executing the method for generating a neural network of the embodiment of the first aspect.

Additional features and advantages of the present invention will be set forth in the subsequent description, and in part will become apparent from the description, or may be learned by practice of the present invention. The purposes and other advantages of the present invention can be realized and obtained by structures particularly noted in the description, the claims and the accompanying drawings.

## BRIEF DESCRIPTION OF DRAWINGS

The accompanying drawings are used to provide further understanding of the technical schemes of the present invention and constitute a part of the description. The accompanying drawings are used to explain the technical schemes of the present invention together with the embodiments of the present invention, and do not constitute a restriction on the technical schemes of the present invention.

Fig. 1 is a schematic diagram of a system architecture platform provided by an embodiment of the present invention;

Fig. 2 is a flowchart of a method for generating a neural network provided by an embodiment of the present invention;

Fig. 3 is a flowchart of a method for generating a neural network provided by another embodiment of the present invention;

Fig. 4 is a flowchart of a method for generating a neural network provided by another embodiment of the present invention;

Fig. 5 is a flowchart of a method for generating a neural network provided by another embodiment of the present invention;

Fig. 6 is a flowchart of a method for generating a neural network provided by another embodiment of the present invention;

Fig. 7 is a flowchart of a method for generating a neural network provided by another embodiment of the present invention; and

Fig. 8 is a flowchart of a method for generating a neural network provided by another embodiment of the present invention.

## DETAILED DESCRIPTION

In order to make the objectives, technical schemes and advantages of the present invention more apparent, the present invention is further described in detail in conjunction with the accompanying drawings and embodiments. It should be understood that the particular embodiments described herein are only intended to explain the present invention, and are not intended to limit the present invention.

It is to be noted that although a functional module division is shown in the schematic diagrams of the device and a logical order is shown in the flowcharts, the steps shown or described may be executed, in some cases, in a different module division from that of the device or in a different order from that in the flowcharts. The terms "first", "second", etc. in the description, the claims or the above-mentioned drawings are intended to distinguish between similar objects and are not necessarily to describe a specific order or sequence.

At present, neural architecture search (NAS) can be roughly divided into two categories based on architecture search strategies: macro search and micro search. In macro search, a search algorithm regards the neural network as a whole, and the search strategy selectively appoints one or more layers to alternative operations (changing layer types or parameters, and inserting new layers). The disadvantage of macro search is that the search space is too large, and it is difficult to determine how long it takes to find an appropriate neural network architecture for highly complex problems, so it is not a hot research topic now. Micro search draws lessons from excellent cases of artificial neural networks (such as ResNet and InceptionNet), and regards the search space as a stack of micro-units. The search strategy only needs to find an optimal network micro-architecture in a relatively limited search space. In practical application, different numbers of micro-units can be stacked to match problems with different complexity levels. The micro search NAS algorithm is a hot research topic because of the reasonable search space size and flexible application.

However, the existing micro search NAS algorithm has a specific deployment problem in practical application. A neural network solving a specific problem needs to be deployed on various terminals with significantly different levels of computing power, such as mobile phones, tablet computers, notebook computers, and desktop computers of different models. Therefore, the NAS algorithm needs to provide a set of neural network models with all sizes for various inference terminals. However, the computing cost for generating such a set of models is huge as a lot of computing power is required.

In view of this, the embodiments of the present invention provide a method for generating a neural network, a device, and a computer-readable storage medium. By acquiring optimal micro-units and constructing a first network by utilizing the optimal micro-units, the first network has a performance strong enough to meet actual application requirements; a second network is obtained by training the first network using a preset training data set, and third networks are established, where the number of micro-units of the third network is less than that of the second network; the micro-units of all the third networks are trained by utilizing the second network, and neural network models are constructed according to the trained micro-units of the third networks, such that the functions of the micro-units of all the third networks correspond to the functions of the second network; compared with a traditional method in which micro-units are trained one by one, the number of training times can be reduced, and the requirement for computing power can be effectively reduced, thus reducing the cost for generating neural network models; besides, the micro-units of all the third networks can be trained in parallel, which can effectively improve the efficiency of constructing neural network models.

The technical schemes in the embodiments of the present invention are clearly and comprehensively described in the following with reference to the drawings. It is obvious that the embodiments described below are only some of the embodiments of the present invention and are not all the embodiments.

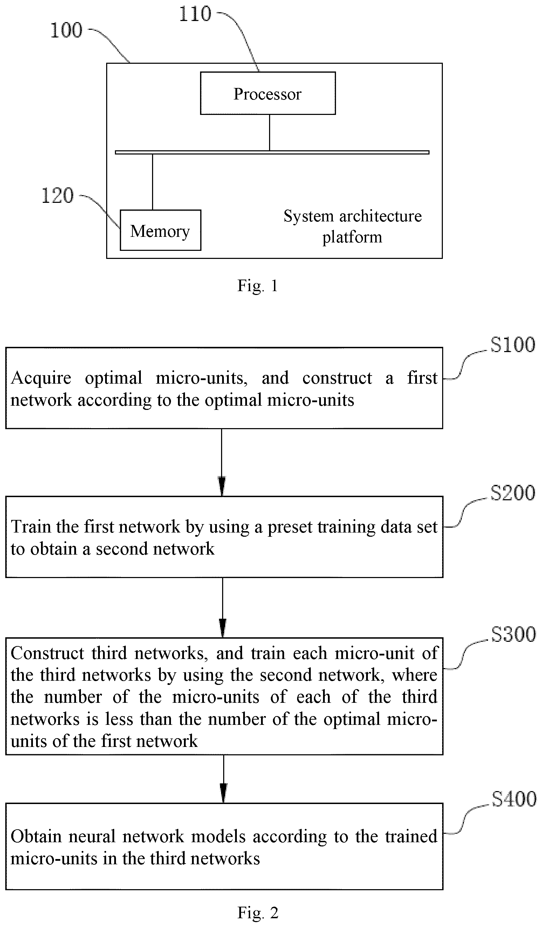

As shown in Fig. 1, Fig. 1 is a schematic diagram of a system architecture platform 100 for performing a method for generating a neural network provided by an embodiment of the present invention.

In the embodiment shown in Fig. 1, the system architecture platform 100 includes a memory 120 and a processor 110, where the memory 120 and the processor 110 may be connected by a bus or in other ways. In Fig. 1, the connection is realized by a bus for example.

Here, as a non-transitory computer-readable storage medium, the memory 120 may be used to store a non-transitory software program and a non-transitory computer-executable program. In addition, the memory 120 may include a high-speed random access memory and a non-transitory memory, for example, at least one magnetic disk storage device, a flash memory device, or another non-transitory solid-state storage device. In some embodiments, the memory 120 may include memories remotely located with respect to the processor, and these remote memories 120 may be connected to the system architecture platform 100 via a network. Examples of the above-mentioned network include the Internet, an intranet, a local area network, a mobile communication network, and a combination thereof.

The system architecture platform 100 and an application scenario described in the embodiment of the present invention are for more clearly describing the technical schemes of the embodiments of the present invention, and do not constitute a limitation on the technical schemes provided by the embodiments of the present invention. Those having ordinary skill in the art may understand that, with evolution of the system architecture platform 100 and emergence of new application scenarios, the technical schemes provided by the embodiments of the present invention are also applicable to similar technical problems.

Those having ordinary skill in the art may understand that the system architecture platform 100 shown in Fig. 1 does not constitute a limitation on the embodiments of the present invention and may include more or fewer components than illustrated, or combine some of the components, or use a different arrangement of the components.

In the system architecture platform 100 shown in Fig. 1, the processor 110 can invoke a data processing program stored in the memory 120, thereby performing the method for generating a neural network.

Based on the system architecture platform 100, various embodiments of the method for generating a neural network of the present invention are provided hereinafter.

As shown in Fig. 2, Fig. 2 is a flowchart of a method for generating a neural network provided by an embodiment of the present invention. The method for generating a neural network includes, but is not limited to, steps S100, S200, S300 and S400.

At S 100, optimal micro-units are acquired, and a first network is constructed according to the optimal micro-units.

In an embodiment, a neural network architecture consists of a large number of micro-units. In neural network search, typically, a search space is defined first. This search space contains basic building blocks that define the neural network architecture. It can be understood that the larger the search space, the more iterations a search algorithm needs to run, and the more computing power of a graphics processing unit (GPU) used. An optimized algorithm can automatically search out an optimal micro-unit network structure. For example, an early algorithm is evolutionary search, which is constantly trained and mutated based on fitness to achieve a good verification and validation index. For another example, a search algorithm based on reinforcement learning allows an intelligent agent to find an optimal configuration of the network architecture. This intelligent agent is usually realized by a recurrent neural network, the goal of which is to find a neural architecture that can obtain higher returns. In this embodiment, a micro search NAS algorithm is used to find the optimal micro-units from the search space.

In an embodiment, a first network is constructed according to the obtained optimal micro-units, and the first network can be understood as a high-performance unit network composed of the optimal micro-units. The size of the unit network can be customized according to actual needs, such that the first network has a performance strong enough to meet the actual application processing requirements. For example, the optimal micro-units are stacked to form the first network, thus realizing rapid construction of a unit network. It can be understood that the more the stacked optimal micro-units, the larger the first network, and the better the performance; on the contrary, the fewer the stacked optimal micro-units, the smaller the first network. In this way, the first network can be constructed according to the actual application requirements, so as to adapt to problems with different complexity levels.

It should be noted that before S 100 is executed, a user can construct the search space of the micro-unit network structure as needed, initialize the search space, and then obtain the optimal micro-units based on the search space, that is, find the optimal micro-units from the limited search space. The size of the search space is reasonable, which helps reduce computing power consumption and improve processing efficiency.

At S200, the first network is trained by utilizing a preset training data set to obtain a second network.

In an embodiment, the first network is trained by utilizing a preset training data set. The training data set can be understood as a data set for training the micro-units. In S 100, the first network constructed by utilizing the optimal micro-units is a network model with undefined parameters, and the parameters of the network model need to be trained through corresponding training data, such that the first network has corresponding computing ability, thus obtaining the second network, that is, the second network is the trained first network.

Taking deep learning as an example, a deep learning model is trained by utilizing a training data set, such that the learning model can meet specific performance indicators. With the increase of training data, the accuracy of the deep learning model will be improved. It can be understood that, as long as training data resources are sufficient, accuracy improvement with the increase of training scale can be expected.

The training data set being preset can be understood as selecting different types of training data sets according to different model objects, and selecting different training data sizes according to the performance requirements of different models. For example, when the training object is an image recognition model, a large number of pictures can be selected as the preset training data set. For another example, when the training object is a speech recognition model, a large number of speech data can be selected as the preset training data set.

At S300, third networks are constructed, and each micro-unit of the third networks is trained by utilizing the second network, where the number of the micro-units of each of the third networks is less than the number of the optimal micro-units of the first network.

In an embodiment, the third network is a network model with undefined parameters, and the number of the micro-units of the constructed third network is less than the number of the optimal micro-units of the first network. It can be understood that a number of third networks with different numbers of micro-units can be constructed, and the number of the micro-units of the obtained third network is less than the number of the optimal micro-units of the first network. To facilitate operations by a computer, the number of the micro-units of each of the third networks and the number of the optimal micro-units of the first network can be set to have a multiple relation or a power relation. For example, the number of the optimal micro-units of the first network can be 20, 40, or 120, and the number of the micro-units of the third network can be set as 2, 4, or 10, that is, third networks with 2, 4, or 10 micro-units can be constructed.

Here, after the construction of the third networks, the second network is used to train all the third networks. Specifically, the second network trains each micro-unit in the third network. It can be understood that the number of the micro-units of each third network is less than the number of the micro-units of the second network. A network model with a smaller number of micro-units can be trained faster. Further, the micro-units of the third networks can be trained in parallel, that is, multiple micro-units can be trained at the same time, so training efficiency is higher and the requirement for computing power is greatly reduced. The trained third network has the same functions as the second network. For example, when the number of the micro-units of the second network is 32 and the number of the micro-units of the third network is 4, the 4 micro-units of the third network can have the same performance as the 32 micro-units of the second network after being trained.

In an embodiment, the second network can be defined as a teacher network and the third network as a student network. The teacher network can train the micro-units of all the student networks, and the micro-units of all the student networks can be trained in parallel, so training time can be reduced and training efficiency can be improved.

At S400, neural network models are obtained according to the trained micro-units in the third networks.

In an embodiment, the micro-units of all the third networks are trained according to the above step S300, and then the trained micro-units of different third networks are arranged to obtain different neural network models. For example, all 4 micro-units of a third network are trained, and the 4 trained micro-units of the third network are then arranged to obtain a neural network model with 4 micro-units. The trained micro-units of different third networks can also be combined to obtain one neural network module. For example, 2 trained micro-units in one third network are combined with 1 trained micro-unit in another third network to obtain a neural network model with 3 micro-units. In this way, after S400 is completed, a plurality of neural network models are obtained, which can be deployed onto different terminals as needed in practical application, thus effectively reducing computing power consumption.

According to this embodiment where the method for generating a neural network is realized by the above steps S 100, S200, S300 and S400, neural network models suitable for terminals with different levels of computing power are obtained according to the actual application requirements. Compared with traditional neural network training methods, the number of training times can be effectively reduced, and the requirement for computing power is reduced, thus reducing the cost for generating neural network models.

In an embodiment, the process of constructing the first network according to the optimal micro-units in S 100 includes but is not limited to the following steps.

At S 110, the optimal micro-units are stacked N times according to a predefined size to generate the first network, where N is an integer power of 2.

Here, the predefined size can be understood as the number of the micro-units of the constructed first network set according to the actual application requirements, and the optimal micro-units are combined by stacking. The more the optimal micro-units are stacked, the larger the first network and the higher the performance. In an embodiment, the optimal micro-units are stacked N times to generate the first network, where N is the number of micro-units required to form a network with strong enough fitting performance, and N is set to an integer power of 2, such as 32, 64, 128, etc. For example, for an image recognition task, a network model with 32 micro-units needs to be constructed according to actual calculation, so the number of the optimal micro-units N of the first network can be 32 or greater than 32, for example, N is set to 64. In this way, network models with strong enough performance can be obtained, so as to adapt to problems with different complexity levels.

In an embodiment, specifically, the optimal micro-units can be stacked according to the topological principle. It can be understood that the construction principle of a topological structure is to only consider the positional relationship between objects and leave aside their shapes and sizes. Topology can be understood as taking the optimal micro-units as points independent of their sizes and shapes. This topology may be a network macro topology or a sequential topology. The number of the optimal micro-units is set according to the topology, and all the optimal micro-units are connected to form the first network.

In an embodiment, the process of obtaining the optimal micro-units in S 100 includes but is not limited to the following steps.

At S 120, according to the NAS algorithm, a network structure of the optimal micro-units is obtained by utilizing a preset search space.

In an embodiment, the NAS algorithm can automatically find an optimal neural network architecture for a specific problem, and the optimal micro-units can be quickly obtained by adopting the NAS algorithm. According to the NAS algorithm, a set of candidate neural network structures called search space is given, and the optimal network structure is searched out from the search space by utilizing a search strategy. The specific principle of the NAS algorithm will not be repeated here.

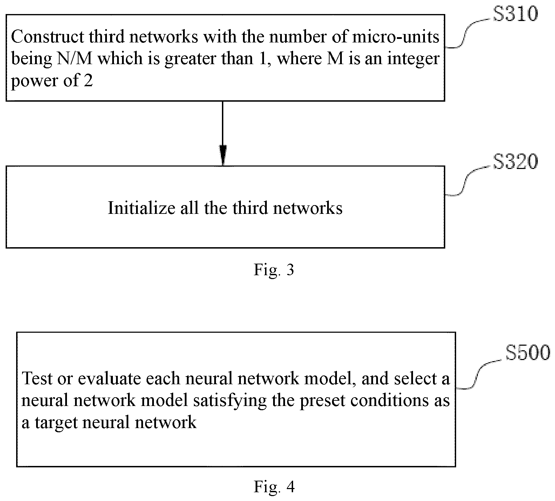

Referring to Fig. 3, in an embodiment, the process of constructing the third networks in S300 may include but is not limited to the following steps.

At S310, third networks with the number of micro-units being N/M which is greater than 1 are constructed, where M is an integer power of 2.

At S320, all the third networks are initialized.

Here, the third network is defined as a student network, and the number of the micro-units of the third network is determined according to the number of the optimal micro-units N of the first network. N is an integer power of 2, the number of the micro-units of the third network is N/M which is greater than 1, and M is an integer power of 2. It can be understood that both N and M are integer powers of 2, and N/M>1 means that N is greater than M. When the condition of N/M>1 is met, a plurality of third networks with different numbers of micro units can be constructed, that is, student networks with N/2, N/4, N/8...2 micro-units can be constructed. For example, when the number of the optimal micro-units N of the first network is 32, M can be 2, 4, 8, and 16, so 4 student networks with 32/2=16, 32/4=8, 32/8=4, and 32/16=2 micro-units are constructed, and then all the student networks are initialized, such that the model parameters of each student network are given default values, so as to obtain student networks with different numbers of micro-units.

It can be understood that the number of the micro-units n of the student network and the number of the optimal micro-units N of the first network have a logarithmic relation, that is, n=logN. In this way, when the micro-units of all the student networks are trained by the teacher network, only logN network structures need to be trained instead of N network structures, which can effectively reduce training time and make training faster. Moreover, the micro-units of the third networks can be trained in parallel, that is, multiple micro-units can be trained at the same time, so compared with a traditional method in which micro-unit networks are trained one by one, training efficiency is higher, and the requirement for computing power is greatly reduced.

In an embodiment, the process of obtaining neural network models according to the trained micro-units in the third networks in S400 may include but is not limited to the following steps.

At S410, the trained micro-units are combined to obtain neural network models with different numbers of micro-units, where the number of the neural network models ranges from 2 to N.

Each micro-unit of the student networks is trained by the teacher network, and then the trained micro-units are arranged and combined. The specific arrangement and combination mode is determined according to the number of the trained micro-units. For example, all 4 micro-units of a student network are trained, and the 4 trained micro-units of the student network are arranged to obtain a neural network model with 4 micro-units. For another example, 2 trained micro-units of one student network are obtained with 1 trained micro-unit of another student network to obtain a neural network model with 3 micro-units. By combining the micro-units of all the student networks, a suite of neural network models of all sizes can be obtained, which can be understood as a collection of neural network models with different numbers of micro-units.

As the functions of the trained micro-units of all the student networks correspond to certain local morphisms of the teacher network, the obtained networks can be directly deployed or fine-tuned and then deployed onto terminals.

It can be understood that, taking a first network formed by stacking optimal micro-units N times as an example, the first network is trained to obtain a teacher network with N micro-units, and at the same time, student networks with N/2, N/4, N/8...2 micro-units can be constructed; and all the student networks are trained by the teacher network, and the trained micro-units are combined to obtain 2 to N neural network models. For example, when N is 32, student networks with 2, 4, 8 and 16 micro-units are constructed, that is, 4 student networks are obtained, and the teacher network has 32 micro-units; and the teacher network trains the student network with 2 micro-units to obtain a neural network model with 2 micro-units, and the functions of the neural network model with 2 micro-units correspond to those of the teacher network, so it can be understood that through the training of the student networks by the teacher network, the micro-unit functions of the teacher network are mapped to the micro-units of the student networks. For another example, the teacher network trains the student network with 4 micro-units to obtain a neural network model with 4 micro-units. In this way, different neural network models can be obtained by combining the micro-units of the student networks.

In an embodiment, the process of training each micro-unit of the third networks by utilizing the second network may include but is not limited to the following steps.

At S330, each micro-unit of the third networks is trained by utilizing the second network in cooperation with the training data set through local input and output of the second network.

During training, the teacher network trains each micro-unit of each student network with the training data set, which is composed of training data of the training teacher network. Specifically, each micro-unit of each student network is trained through local input and output of the teacher network.

A specific example will be used for illustration. The number of the optimal micro-units of the first network is N, and here N is set to 8 for convenience of explanation, which should be set to 32, 64 or more in practical applications. For example, the first network is $a$ - $a$ - $a$ - $a$ - $a$ - $a$ - $a$ - $a$, a teacher network $a_1$ - $a_2$ - $a_3$ - $a_4$ - $a_5$ - $a_6$ - $a_7$ - $a_8$ is obtained after the first network is trained, then student networks with 2 and 4 micro-units are constructed, and the two student networks are trained by the teacher network. Taking the student network $a'_1 - a'_2 - a'_3 - a'_4$ with 4 micro-units as an example, for an image data sample $S$, the parameter gradient of the micro-unit $a'_1$ of the student network can be calculated by the input tensor of the unit $a_1$ of the teacher network and the output tensor of the unit $a_2$:

$$i_{a_1} = S;$$

$$o_{a_2} = f_{a_2}(W_{a_2}, f_{a_1}(W_{a_1}, i_{a_1}));$$

$$L_{a'_1} = E(f_{a'_1}(W_{a'_1}, i_{a1}), o_{a_2});$$

$$\Delta W_{a'_1} = \frac{\partial L_{a'_1}}{\partial w_{a'_1}};$$

$$W_{a'_1} = W_{a'_1} - \eta \Delta W_{a'_1};$$

where $i_{a_1}$, represents the input of the unit $a_1$ of the teacher network, $S$ represents the specific data sample, $o_{a_2}$ represents the output of the micro-unit $a_2$ of the teacher network, $W_{a_1}$, $f_{a_1}$ represents the model parameter and activation function of the micro-unit $a_1$, similarly, $W_{a_2}$, $f_{a_2}$ and $W_{a'_1}, f_{a'_1}$ are the model parameters and activation functions of the micro-units $a_2$ and $a'_1$, $L_{a'_1}$ is the loss function calculated by the micro-unit $a'_1$ based on the data sample S, E represents the loss function calculation method, $\Delta W_{a'_1}$ represents the model parameter gradient of this unit calculated by the micro-unit $a_1'$ based on the partial derivative of the loss function $L_{a_1'}$, and $\eta$ represents the learning rate of this updated model parameter.

The parameter gradient calculation method of the other three units $a_2'$, $a_3'$, and $a_4'$ in the student network is consistent with the above calculation method. It can be understood that after training, the local morphism $a_1$ - $a_2$ of the teacher network is replaced with $a_1'$, the local morphism $a_3$ - $a_4$ of the teacher network is replaced with $a_2'$, the local morphism $a_5$ - $a_6$ of the teacher network is replaced with $a_3'$, and the local morphism $a_7$ - $a_8$ of the teacher network is replaced with $a_4'$, so that the neural network model $a_1' - a_2' - a_3' - a_4'$ is obtained.

It can be understood that for the student network $a_1'' - a_2''$ with 2 micro-units, the local morphism $\begin{matrix} a_1 \text{ - } a_3 \\ a_2 \text{ - } a_4 \end{matrix}$ of the teacher network is replaced with $a_1''$, and the local morphism $\begin{matrix} a_5 \text{ - } a_7 \\ a_6 \text{ - } a_8 \end{matrix}$ of the teacher network is replaced with $a_2''$, so that the neural network model $a_1'' - a_2''$ is obtained. In this way, the micro-units of the student networks are trained by the local input and output of the teacher network, thus completing the training of the micro-units of all the student networks, and because the micro-units of all the student networks can be trained in parallel, the required time can be greatly reduced and the training efficiency can be effectively improved.

In an embodiment, in S410, the trained micro-units are combined to obtain 2 to N neural network models, that is, a suite of neural network models of all sizes can be obtained by combining the trained micro-units. As in the above example described with respect to S330, the following neural network models with all sizes can be obtained:

2 micro-units: $a_1'' - a_2''$ ;

3 micro-units: $a_1'' \text{ - } a_3' \text{ - } a_4'$ or $a_1' \text{ - } a_2' \text{ - } a_2''$ ;

4 micro-units: $a_1' - a_2' - a_3' - a_4'$ ;

5 micro-units: $a_1' - a_2' - a_3' - a_7 \text{ - } a_8$ ;

6 micro-units: $a_1' - a_2' - a_5 \text{ - } a_6 - a_7 \text{ - } a_8$ ;

7 micro-units: $a_1' - a_3 \text{ - } a_4 - a_5 \text{ - } a_6 - a_7 \text{ - } a_8$ ;

8 micro-units: $a_1$ - $a_2$ - $a_3$ - $a_4$ - $a_5$ - $a_6$ - $a_7$ - $a_8$ .

Here, the combination of 5, 6 and 7 micro-units is not limited to the models shown above, which will not be detailed here.

Referring to Fig. 4, in an embodiment, the method for generating a neural network further includes but is not limited to the following steps.

At S500, each neural network model is tested or evaluated, and a neural network model satisfying preset conditions is selected as a target neural network.

After S100, S200, S300 and S400 of the embodiment are completed, a suite of neural network models of all sizes are obtained. Because the neural network models need to be deployed onto various terminals with significantly different levels of computing power, an appropriate neural network model needs to be selected from all the combinations according to the requirements for the performance of the neural network model and the inference latency requirements of a target terminal, and then the appropriate neural network model is used as the target neural network and deployed onto the terminal.

Specifically, by testing or evaluating each neural network model, the neural network model that meets the preset conditions is selected as the target neural network. Here, all the neural network models can be tested by utilizing a test data set, so as to obtain improved neural network models. The floating-point operations per second (FLOPs) of the neural network model can be evaluated offline, for example, a neural network model with FLOPs less than 400 M is selected as the target neural network.

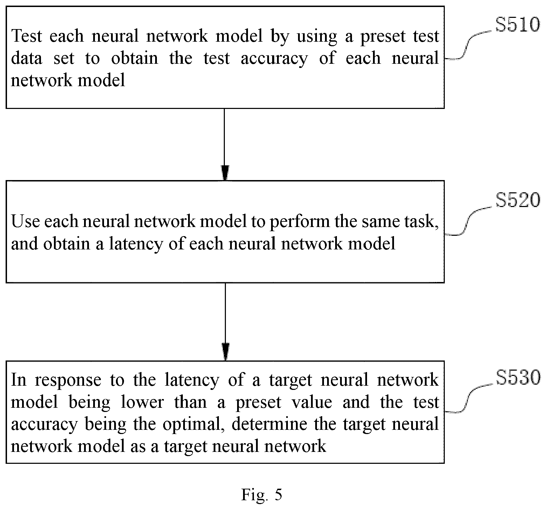

Referring to Fig. 5, in an embodiment, the process of testing each neural network model and selecting a neural network model satisfying preset conditions as a target neural network includes the following steps.

At S510, each neural network model is tested by utilizing a preset test data set to obtain the test accuracy of each neural network model.

At S520, each neural network model is used to perform the same task, and a latency of each neural network model is obtained.

At S530, in response to the latency of a target neural network model being lower than a preset value and the test accuracy being the optimal, the neural network model is determined as a target neural network.

Here, in S510, the preset test data set can be understood as a collection of data used to test the neural network models, and corresponding test data are selected according to different performance requirements of terminals. By testing each neural network model, the testing accuracy of each neural network model can be obtained. It can be understood that the higher the testing accuracy, the higher the performance index, and neural network models with high testing accuracy are preferred.

S520 is executed on the target terminal, in which each neural network model is used to perform the same task, and the latency of each neural network model is obtained. This step is used to test the latency indexes of each neural network model on the terminal. Generally, transmission latency and propagation latency are the main indexes of concern, and the higher the latency, the greater the data processing time interval and the lower the task execution efficiency. Therefore, neural network models with lower task execution latency are preferred.

In this way, each neural network model is tested in terms of two indexes: latency and test accuracy. In response to the latency of the tested neural network model being lower than the preset value and the test accuracy being the optimal, it is determined that the neural network model is the target neural network. In the embodiment, the latency can be limited within 500 ms, or 400 ms or other preset values. The test accuracy can be set to reach 95% or more, and in the embodiment, it is set to 96.3%.

In order to more clearly explain the specific steps of the method for generating a neural network in the above embodiments, three embodiments will be described below for further explanation.

Embodiment I:

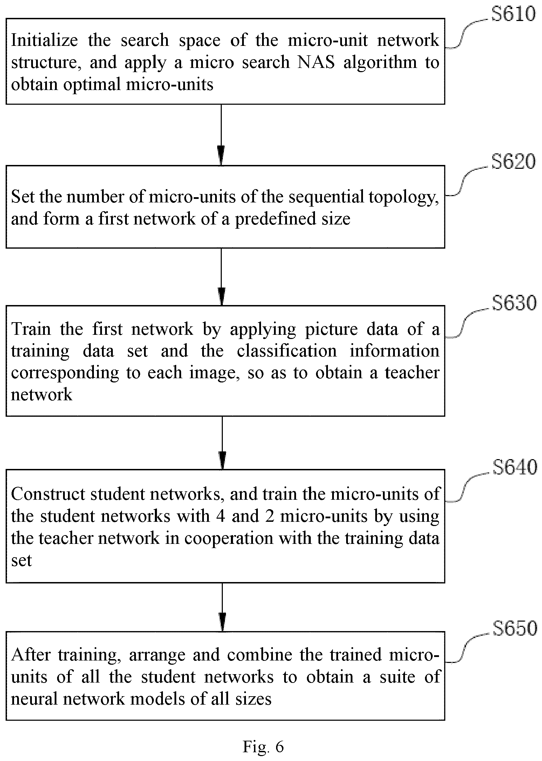

As shown in Fig. 6, a search space of the NAS algorithm is defined as a micro-unit space, the micro-unit is of a single-input single-output structure, and the macro-unit topology is of a sequential structure; and a network model composed of multiple micro-units is used to solve the problem of image classification, multi-channel image data are used as input, actual classification of image content is output, and then the method for generating a neural network includes the following steps.

At S610, the search space of the micro-unit network structure is initialized, and the micro search NAS algorithm is applied to obtain optimal micro-units.

At S620, the number of micro-units of the sequential topology is set, and a first network $a$ - $a$ - $a$ - $a$ - $a$ - $a$ - $a$ - $a$ of a predefined size is formed.

At S630, the first network is trained by applying picture data of a training data set and the classification information corresponding to each image, so as to obtain a teacher network $a_1$ - $a_2$ - $a_3$ - $a_4$ - $a_5$ - $a_6$ - $a_7$ - $a_8$.

At S640, student networks are constructed, and the micro-units of the student networks with 4 and 2 micro-units are trained by utilizing the teacher network in cooperation with the training data set.

At S650, after training, the trained micro-units of all the student networks are arranged and combined to obtain a suite of neural network models of all sizes.

Refer to S330 in the above embodiment for the specific process of training of the student networks by the teacher network, which will not be repeated here. In this embodiment, the optimal micro-unit is of a single-input single-output structure.

Embodiment II:

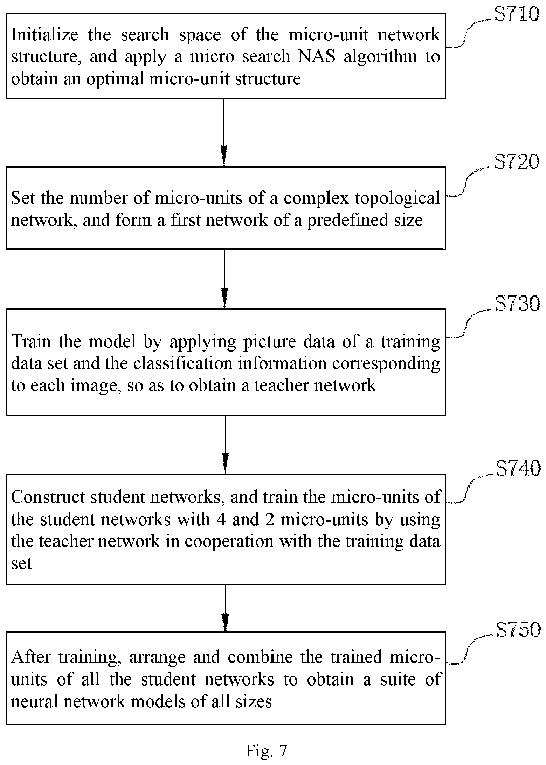

As shown in Fig. 7, a search space of the NAS algorithm is defined as a micro-unit space, and the micro-unit is of a two-input single-output structure; and a network model composed of multiple micro-units is used to solve the problem of image classification, multi-channel image data are used as input, actual classification of image content is output, and then the method for generating a neural network includes the following steps.

At S710, the search space of the micro-unit network structure is initialized, and the micro search NAS algorithm is applied to obtain an optimal micro-unit structure.

$$a - a - a - a$$

At S720, the number of micro-units of a complex topological network is set, and a first network $a - a - a - a$ of a predefined size is formed.

At S730, the model is trained by applying picture data of a training data set and the classification information

$$a_1 - a_3 - a_5 - a_7$$

corresponding to each image, so as to obtain a teacher network $\begin{matrix} a_1 - a_3 - a_5 - a_7 \\ a_2 - a_4 - a_6 - a_8 \end{matrix}$ .

At S740, student networks are constructed, and the micro-units of the student networks with 4 and 2 micro-units are trained by utilizing the teacher network in cooperation with the training data set.

At S750, after training, the trained micro-units of all the student networks are arranged and combined to obtain a suite of neural network models of all sizes.

Taking the student network $a_1' - a_2' - a_3' - a_4'$ with 4 micro-units as an example, for an image data sample S, the parameter gradient of the micro-unit $a_2'$ of the student network can be calculated by the output tensor of the units $a_1$ and $a_2$ of the teacher network and the combined tensor output by the units $a_3$ and $a_4$,

$$i_{a_1} = S$$

$$o_{a_1} = f_{a_1}(W_{a_1}, S, S), o_{a_2} = f_{a_2}(W_{a_2}, o_{a_1}, S)$$

$$o_{a_3} = f_{a_3}(W_{a_3}, o_{a_2}, o_{a_1}), o_{a_4} = f_{a_4}(W_{a_4}, o_{a_3}, o_{a_2})$$

$$L_{a_2'} = E(f_{a_2'}(W_{a_2'}, o_{a_2}, o_{a_1}), (o_{a_3} \oplus o_{a_4}))$$

$$\Delta W_{a_2'} = \frac{\partial L_{a_2'}}{\partial w_{a_2'}}$$

$$W_{a_2'} = W_{a_2'} - \eta \Delta W_{a_2'}$$

where $i_{a1}$ represents the input of the unit $a_1$ of the teacher network, S represents the specific data sample, $o_{a1}$, $o_{a2}$, $o_{a3}$ and $o_{a4}$ represent the outputs of the micro-units $a_1$, $a_2$ , $a_3$ and $a_4$ of the teacher network, $W_{a1}$, $f_{a1}$ represents the model parameter and activation function of the micro-unit $a_1$, similarly, $W_{a2}, f_{a2}$, $W_{a3}, f_{a3}$, $W_{a4}, f_{a4}$ and $W_{a_2'}, f_{a_2'}$ are the model parameters and activation functions of the micro-units $a_2$, $a_3$, $a_4$ and $a_2'$, $L_{a_2'}$ is the loss function calculated by the micro-unit $a_2'$ based on the sample S, E represents the loss function calculation method, $o_{a3} \oplus o_{a4}$ represents the splicing of the outputs of two micro-units, $\Delta W_{a_2'}$ represents the model parameter gradient of this unit calculated by the micro-unit $a_2'$ based on the partial derivative of the loss function $L_{a_2'}$ , and $\eta$ represents the learning rate of this updated model parameter.

The parameter gradient calculation method of the other three units $a_1'$, $a_3'$ and $a_4'$ in the student network is consistent with the above calculation method. The same is true for the student network $a_1'' - a_2''$ with two micro-units.

In S750, taking the combination of three micro-unit networks as an example, there are two combinations:

1. $a_1'' - a_3' - a_4'$ : the local morphism $\dfrac{a_1 - a_3}{a_2 - a_4}$ of the teacher network is replaced with $a_1''$, $a_6$ is replaced with $a_3'$

$a_7$

, and $a_8$ is replaced with $a_4'$ ; and

2. $a_1' - a_2' - a_2''$ : the local morphism $\dfrac{a_5 - a_7}{a_6 - a_8}$ of the teacher network is replaced with $a_2''$, $a_2$ is replaced with $a_1'$

$a_3$

, and $a_4$ is replaced with $a_2'$ .

In this embodiment, the optimal micro-unit is of a double-input single-output structure.

Embodiment III:

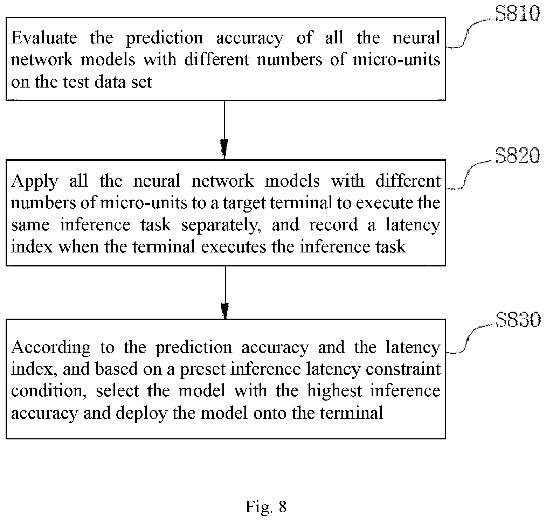

As shown in Fig. 8, after obtaining a suite of neural network models of all sizes, the constraint condition of the target terminal is that the online inference latency should not exceed 500 ms, and then the process for testing a neural network model includes the following steps.

At S810, the prediction accuracy of all the neural network models with different numbers of micro-units is evaluated on the test data set.

At S820, all the neural network models with different numbers of micro-units are applied to the target terminal to execute the same inference task separately, and the latency index when the terminal executes the inference task is recorded.

At S830, according to the prediction accuracy and the latency index, and the preset inference latency constraint condition, the model with the highest inference accuracy is selected and deployed onto the terminal.

In this embodiment, classification networks composed of more than five micro-units are run by the terminal, and the inference latency is all greater than 500 ms, which does not meet the constraint conditions. Therefore, a neural network model with the best performance should be selected from networks composed of four or less micro-units. For example, the network with the highest accuracy among the qualified models can have a test accuracy as high as 96.3%, so this neural network model should be deployed onto the terminal.

In addition, an embodiment of the present invention also provides a device, including: a memory, a processor, and a computer program stored in the memory and executable by the processor. The processor and the memory may be connected by a bus or by other means.

As a non-transitory computer-readable storage medium, the memory can be used to store a non-transitory software program and a non-transitory computer-executable program. In addition, the memory may include a high-speed random access memory and a non-transitory memory, for example, at least one magnetic disk storage device, a flash memory device, or another non-transitory solid-state storage device. In some embodiments, the memory may include memories remotely located with respect to the processor, and these remote memories may be connected to the processor via a network. Examples of the above-mentioned network include the Internet, an intranet, a local area network, a mobile communication network, and a combination thereof.

It should be noted that the terminal device in this embodiment may include the system architecture platform 100 in the embodiment shown in Fig. 1. The terminal device in this embodiment and the system architecture platform 100 in the embodiment shown in Fig. 1 are of the same inventive concept. Therefore, these embodiments have the same implementation principle and technical effects, and details will not be repeated herein.

Non-transient software programs and instructions required to implement the method for generating a neural network in any of the above embodiments are stored in the memory, and when executed by the processor, cause the processor to perform the method for generating a neural network in any of the above embodiments, for example, execute the above-described method steps S100 to S400 in Fig. 2, S310 to S320 in Fig. 3, S500 in Fig. 4, S510 to S530 in Fig. 5, S610 to S650 in Fig. 6, S710 to S750 in Fig. 7, or S810 to S830 in Fig. 8.

The apparatus embodiments described above are only for illustration. The units described as separate components may or may not be physically separated, that is, they may be located at one place or distributed to multiple network units. Some or all of the modules can be selected according to actual needs to achieve the purpose of this embodiment.

Furthermore, an embodiment of the present invention also provides a computer-readable storage medium which stores computer-executable instructions which, when executed by a processor or controller, for example, the processor in any of the above-mentioned embodiments of the terminal device, can cause the processor to perform the method for generating a neural network in any of the above embodiments, for example, to perform the above-described method steps S100 to S400 in Fig. 2, S310 to S320 in Fig. 3, S500 in Fig. 4, S510 to S530 in Fig. 5, S610 to S650 in Fig. 6, S710 to S750 in Fig. 7, or S810 to S830 in Fig. 8.

According to the embodiments of the present invention, by acquiring optimal micro-units and constructing a first network by utilizing the optimal micro-units, the first network has a performance strong enough to meet actual application requirements; a second network is obtained by training the first network using a preset training data set, and third networks are established, where the number of micro-units of the third network is less than the number of the optimal micro-units of the first network; the micro-units of all the third networks are trained by utilizing the second network, and neural network models are constructed according to the trained micro-units of the third networks, such that the functions of the micro-units of all the third networks correspond to the functions of the second network; compared with a traditional method in which micro-units are trained one by one, the number of training times can be reduced, and the requirement for computing power can be effectively reduced, thus reducing the cost for generating neural network models; besides, the micro-units of all the third networks can be trained in parallel, which can effectively improve the efficiency of constructing neural network models.

It can be understood by those having ordinary skill in the art that all or some of the steps of the methods and systems disclosed above can be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software can be distributed on computer-readable media, which can include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and can include any information transmission media.

The above is a detailed description of some embodiments of the present invention, but the present invention is not limited to the above-mentioned embodiments. Those of ordinary skill in the art can also make various equivalent modifications or replacements without departing from the scope of the present invention, and these equivalent modifications or replacements are all included in the scope defined by the claims of the present invention.

**Claims**

1. A method for generating a neural network, comprising:

   acquiring optimal micro-units, and constructing a first network according to the optimal micro-units;
   training the first network by utilizing a preset training data set to obtain a second network;
   constructing third networks, and training each micro-unit of the third networks by utilizing the second network, the number of the micro-units of each of the third networks being less than the number of the optimal micro-units of the first network; and
   obtaining neural network models according to the trained micro-units in the third networks.

2. The method for generating a neural network of claim 1, wherein constructing a first network according to the optimal micro-units comprises:
   stacking the optimal micro-units N times according to a predefined size to generate the first network, N being an integer power of 2.

3. The method for generating a neural network of claim 2, wherein constructing third networks comprises:

   constructing the third networks with the number of micro-units being N/M which is greater than 1, M being an integer power of 2; and
   initializing all the third networks.

4. The method for generating a neural network of claim 3, wherein obtaining neural network models according to the trained micro-units in the third networks comprises:
combining the trained micro-units to obtain the neural network models with different numbers of micro-units, wherein the number of the neural network models ranges from 2 to N.

5. The method for generating a neural network of any one of claims 1 to 4, wherein training each micro-unit of the third networks by utilizing the second network comprises:
training each micro-unit of the third networks by utilizing the second network in cooperation with the training data set through local input and output of the second network.

6. The method for generating a neural network of claim 1, further comprising:
testing or evaluating each neural network model, and selecting a neural network model satisfying preset conditions as a target neural network.

7. The method for generating a neural network of claim 6, wherein testing or evaluating each neural network model and selecting a neural network model satisfying preset conditions as a target neural network comprises:

   testing each neural network model by utilizing a preset test data set to obtain a test accuracy of each neural network model;
   utilizing each neural network model to perform the same task, and obtaining a latency of each neural network model; and
   in response to the latency of a target neural network model being lower than a preset value and the test accuracy being the optimal, determining the target neural network model as the target neural network.

8. The method for generating a neural network of claim 1, wherein acquiring the optimal micro-units comprises:
according to a neural architecture search, NAS, algorithm, obtaining a network structure of the optimal micro-units by utilizing a preset search space.

9. A device, comprising a memory, a processor, and a computer program stored in the memory and executable by the processor, wherein the computer program, when executed by the processor, causes the processor to perform the method for generating a neural network of any one of claims 1 to 8.

10. A computer-readable storage medium storing computer-executable instructions, wherein the computer-executable instructions are configured for implementation of the method for generating a neural network of any one of claims 1 to 8.

Fig. 1

Acquire optimal micro-units, and construct a first network according to the optimal micro-units

S100

Train the first network by using a preset training data set to obtain a second network

S200

Construct third networks, and train each micro-unit of the third networks by using the second network, where the number of the micro-units of each of the third networks is less than the number of the optimal micro-units of the first network

S300

Obtain neural network models according to the trained micro-units in the third networks

S400

Fig. 2

Construct third networks with the number of micro-units being N/M which is greater than 1, where M is an integer power of 2

S310

Initialize all the third networks

S320

Fig. 3

Test or evaluate each neural network model, and select a neural network model satisfying the preset conditions as a target neural network

S500

Fig. 4

Test each neural network model by using a preset test data set to obtain the test accuracy of each neural network model

~S510

Use each neural network model to perform the same task, and obtain a latency of each neural network model

~S520

In response to the latency of a target neural network model being lower than a preset value and the test accuracy being the optimal, determine the target neural network model as a target neural network

~S530

Fig. 5

Initialize the search space of the micro-unit network structure, and apply a micro search NAS algorithm to obtain optimal micro-units ⟋S610

Set the number of micro-units of the sequential topology, and form a first network of a predefined size ⟋S620

Train the first network by applying picture data of a training data set and the classification information corresponding to each image, so as to obtain a teacher network ⟋S630

Construct student networks, and train the micro-units of the student networks with 4 and 2 micro-units by using the teacher network in cooperation with the training data set ⟋S640

After training, arrange and combine the trained micro-units of all the student networks to obtain a suite of neural network models of all sizes ⟋S650

Fig. 6

Initialize the search space of the micro-unit network structure, and apply a micro search NAS algorithm to obtain an optimal micro-unit structure ⌐S710

Set the number of micro-units of a complex topological network, and form a first network of a predefined size ⌐S720

Train the model by applying picture data of a training data set and the classification information corresponding to each image, so as to obtain a teacher network ⌐S730

Construct student networks, and train the micro-units of the student networks with 4 and 2 micro-units by using the teacher network in cooperation with the training data set ⌐S740

After training, arrange and combine the trained micro-units of all the student networks to obtain a suite of neural network models of all sizes ⌐S750

Fig. 7

Evaluate the prediction accuracy of all the neural network models with different numbers of micro-units on the test data set — S810

Apply all the neural network models with different numbers of micro-units to a target terminal to execute the same inference task separately, and record a latency index when the terminal executes the inference task — S820

According to the prediction accuracy and the latency index, and based on a preset inference latency constraint condition, select the model with the highest inference accuracy and deploy the model onto the terminal — S830

Fig. 8

## INTERNATIONAL SEARCH REPORT

| | International application No. |
| --- | --- |
| | **PCT/CN2021/101545** |

**A. CLASSIFICATION OF SUBJECT MATTER**

G06N 3/08(2006.01)i; G06N 3/04(2006.01)i; G06K 9/62(2006.01)i

According to International Patent Classification (IPC) or to both national classification and IPC

**B. FIELDS SEARCHED**

Minimum documentation searched (classification system followed by classification symbols)

G06N G06K

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT; IEEE; Web of Science: 中兴, 裘瑞涛, 杨玺坤, 骆庆开, 韩炳涛, 王永成, 屠要峰, 神经网络, 架构, 结构, 搜索, 教师, 老师, 教员, 学生, 学员, 指导, 蒸馏, Qiu ruitao, Yang xikun, Luo qingkai, Han bingtao, Wang yongcheng, Tu yaofeng, neural architecture search, NAS, teacher, student, distil

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112561027 A (HUAWEI TECHNOLOGIES CO., LTD.) 26 March 2021 (2021-03-26) description paragraphs [0168]-[0206] | 1-10 |
| PX | CN 111598216 A (BEIJING BAIDU NETCOM SCIENCE AND TECHNOLOGY CO., LTD.) 28 August 2020 (2020-08-28) description, paragraphs [0002]-[0049] | 1-10 |
| PX | CN 111723914 A (SUN YAT-SEN UNIVERSITY) 29 September 2020 (2020-09-29) description, paragraphs [0002]-[0109] | 1-10 |
| X | CN 110298240 A (BEIJING MEGVII TECHNOLOGY CO., LTD.) 01 October 2019 (2019-10-01) description paragraphs [0002]-[0226] | 1-10 |
| A | CN 110476172 A (GOOGLE INC.) 19 November 2019 (2019-11-19) entire document | 1-10 |
| A | CN 111008693 A (DEEPMOTION (BEIJING) CO., LTD.) 14 April 2020 (2020-04-14) entire document | 1-10 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 August 2021** | **30 August 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

EP 4 170 552 A1

# INTERNATIONAL SEARCH REPORT
**Information on patent family members**

International application No.

**PCT/CN2021/101545**

| Patent document cited in search report | | | Publication date (day/month/year) | Patent family member(s) | | | Publication date (day/month/year) |
|---|---|---|---|---|---|---|---|
| CN | 112561027 | A | 26 March 2021 | WO | 2021057056 | A1 | 01 April 2021 |
| CN | 111598216 | A | 28 August 2020 | None | | | |
| CN | 111723914 | A | 29 September 2020 | None | | | |
| CN | 110298240 | A | 01 October 2019 | None | | | |
| CN | 110476172 | A | 19 November 2019 | WO | 2019018375 | A1 | 24 January 2019 |
| | | | | JP | 2020522035 | A | 27 July 2020 |
| | | | | US | 2019026639 | A1 | 24 January 2019 |
| | | | | US | 10521729 | B2 | 31 December 2019 |
| | | | | EP | 3583553 | A1 | 25 December 2019 |
| | | | | IN | 201927036012 | A | 24 January 2020 |
| CN | 111008693 | A | 14 April 2020 | None | | | |

Form PCT/ISA/210 (patent family annex) (January 2015)

**REFERENCES CITED IN THE DESCRIPTION**

**Patent documents cited in the description**

- CN 202010581487